# EUROPÄISCHE PATENTANMELDUNG

(11) **EP 3 117 939 A1**
(43) Veröffentlichungstag der Anmeldung: **18.01.2017**
(21) Anmeldenummer: 15176566.6
(22) Anmeldetag: 14.07.2015
(51) Int. Cl.: B23B 51/02, B23P 15/32, C22C 29/08, B22F 5/00

(54) **WERKZEUG**

(71) Anmelder: HILTI Aktiengesellschaft, 9494 Schaan (LI)
(72) Erfinder: Momeni, Siavash, 9470 Buchs (CH); Moseley, Steven, 6820 Nenzing-Gurtis (AT); Glaser, Arno, 9494 Schaan (LI); Müller-Grunz, Andrea, 4514 Differange (LU); Useldinger, Ralph, 8286 Kehlen (LU)
(74) Vertreter: Hilti Aktiengesellschaft Corporate Intellectual Property

(57) **Zusammenfassung**

Ein Werkzeug hat einen Grundkörper 4 aus einem niedriglegierten Stahl. Das Werkzeug hat eine oder mehreren gesinterte Schneiden 6. Die Schneide 6 hat eine Schneidkante 8 und einen Sockel 17. Die Schneide 6 ist mit dem Sockel 17 an dem Grundkörper 4 angeschweißt. Die Schneidkante 8 besteht aus einem Hartmetall. Das Hartmetall hat wenigstens 82 Vol. % Wolframkarbid und einen metallischen Binder aus einer Kobalt-NickelBasis-Legierung. Der Sockel besteht aus einem partikelverstärkten Metallverbundwerkstoff. Die Matrix des Metallverbundwerkstoffs ist eine Kobaltnickel-Legierung. Die in der Matrix eingebetteten Partikel sind Karbide der Übergangsmetalle der Gruppen IV bis VI des Periodensystems. Die Matrix hat einen Anteil von 40 Vol. % bis 75 Vol.-% an dem Metallverbundwerkstoff.

## Beschreibung

### GEBIET DER ERFINDUNG

Die vorliegende Erfindung betrifft ein Werkzeug zum maschinellen Bearbeiten von Bauwerkstoffen, insbesondere meißelnde Bohrer mit einem gesinterten Hartmetallkopf und rotierende Sägeblätter mit angeschweißten Schneiden aus gesintertem Hartmetall. Das Werkzeug eignet sich insbesondere zum Bearbeiten von stahlarmierten mineralischen Bauwerkstoffen.

### OFFENBARUNG DER ERFINDUNG

Das erfindungsgemäße Werkzeug, insbesondere ein Bohrer oder ein Kreissägeblatt zum maschinellen Bearbeiten von Bauwerkstoffen, hat einen Grundkörper aus einem niedriglegierten Stahl. Der Grundkörper ist beispielsweise der wendelförmige oder zylindrische Schaft des Bohrers oder die Scheibe für das Kreissägeblatt. Das Werkzeug hat eine oder mehrere gesinterte Schneiden. Die Schneide hat eine Schneidkante und einen Sockel. Die Schneide ist mit dem Sockel an dem Grundkörper angeschweißt. Die Schneidkante besteht aus einem Hartmetall. Das Hartmetall hat wenigstens 82 Vol.-% Wolframkarbid und einen metallischen Binder aus einer Kobalt-Nickel-Basis-Legierung, d.h. einer Legierung, die Kobalt und Nickel als Hauptbestandteile enthält. Der Sockel besteht aus einem partikelverstärkten Metallverbundwerkstoff. Die Matrix des Metallverbundwerkstoffs ist eine Kobaltnickel-Legierung. Die in der Matrix eingebetteten Partikel sind Karbide der Übergangsmetalle der Gruppen IV bis VI des Periodensystems, bevorzugt Wolframkarbid, Titankarbid, Niobkarbid, Molybdänkarbid und/oder Chromkarbid. Die Matrix hat einen Anteil von 40 Vol.-% bis 75 Vol.-% an dem Metallverbundwerkstoff.

Die Verwendung des partikelverstärkten Metallverbundwerkstoffs ermöglicht ein Herstellen der Schneiden mit wenigen Prozessschritten und ein dauerfestes Aufschweißen der Schneiden auf einer einfachen Stahlsorte. Sowohl die Fügezone zwischen Hartmetall und dem Metallverbundwerkstoff als auch zwischen dem Metallverbundwerkstoff und dem Stahl unterliegt beim Bohren, Sägen, etc. thermomechanischen Spannungen. Die Zugeigenspannungen auf das Hartmetall können durch die Materialkombination ausreichend gering gehalten werden, so dass die Fügezonen nicht reißen. Obwohl der metallische Anteil in dem Hartmetall bereits gering ist, erweist sich die ähnliche Zusammensetzung von Binder und Matrix als ebenso wichtig, wie der Anteil von Partikeln in dem Metallverbundwerkstoff.

Die Kobaltnickel-Legierung des Metallverbundwerkstoffs hat vorzugsweise ein stöchiometrisches Verhältnis von 1:4 bis 4:1 von Kobalt zu Nickel. Die Kobaltnickel-Legierung besteht, bis auf metallische Verunreinigungen, aus Kobalt, Nickel und gelöstem Übergangsmetall aus den eingebetteten Partikeln. Reine Kobaltnickel-Legierungen, die sowohl einen deutlichen Kobaltanteil (größer 20 Vol.-% der Kobaltnickel-Legierung) als auch ein deutlichen Nickelanteil (größer 20 Vol.-% der Kobaltnickel-Legierung) aufweisen, erweisen sich als besonders geeignet, das spröde Hartmetall dauerfest an den stählernen Grundkörper anzubinden.

Die Kobalt-Nickel-Basis-Legierung des Hartmetalls hat vorzugsweise ein stöchiometrisches Verhältnis von 1:4 bis 4:1 von Kobalt zu Nickel. Insbesondere weicht das stöchiometrische Verhältnis des Binders nur wenig von dem stöchiometrischen Verhältnis in der Matrix des Metallverbundwerkstoffs ab, vorzugsweise unterscheiden sich die Verhältnisse um weniger als einen Faktor 2.

Ein besonders geeigneter Sockel zeichnet sich durch folgende Zusammensetzung aus: die Matrix hat einen Anteil von 43 Vol.-% bis 49 Vol.-% und die Partikel haben einen Anteil von 57 Vol.-% bis 51 Vol.-%. Der Volumenanteil des Wolframkarbids an dem Hartmetall kann zwischen dem 1,35-fachen und dem 3,8-fachen des Volumenanteils der Partikel an dem Metallverbundwerkstoff entsprechen.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: eine schematische Darstellung eines Bohrkopfs
- Fig. 3 und Fig. 4: Schliffbilder des Bohrkopfs
- Fig. 5: ein Sägeblatt

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

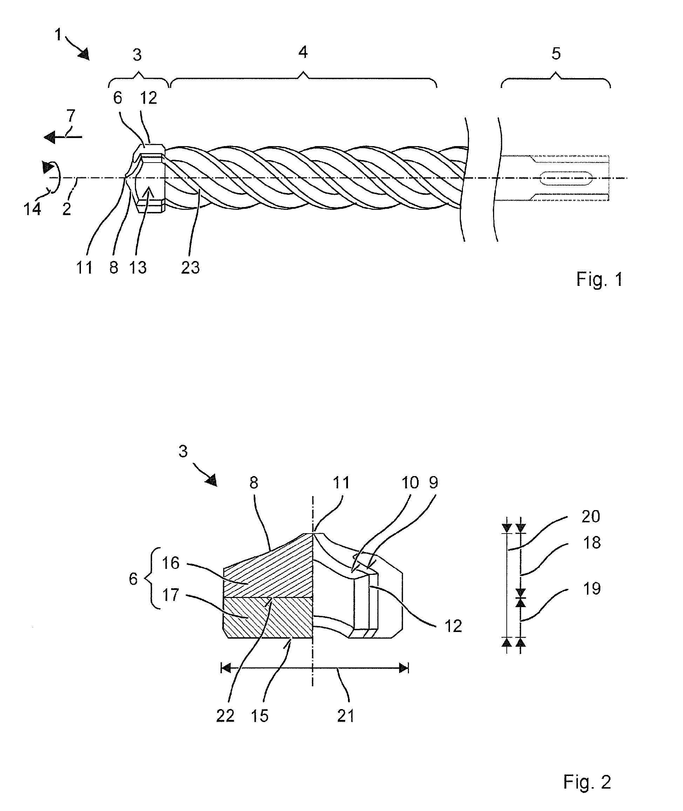

Fig. 1 zeigt schematisch vereinfacht einen beispielhaften Wendelbohrer **1** zum Bearbeiten von Gestein oder mineralischen Baumaterialien. Der Wendelbohrer **1** hat längs einer Bohrerachse **2** aufeinanderfolgend einen Bohrkopf **3,** einen tragenden Grundkörper **4** gebildet durch eine beispielsweise spiralförmige Wendel, und ein Einsteckende **5.** Fig. 2 zeigt vergrößert den Bohrkopf **3** in einem partiellen Anschnitt.

Der dargestellte Wendelbohrer **1** ist für die Bearbeitung von armiertem Gestein ausgelegt, insbesondere für eine der Drehbewegung überlagerte Meißeltätigkeit. Der Bohrkopf 3 hat drei bis sechs, beispielsweise vier, monolithisch zusammenhängende Schneiden **6.** Die Schneiden **6** haben jeweils eine in Schlagrichtung **7** weisende Schneidkante **8.** Die Schneidkanten **8** sind jeweils als Kreuzungslinie einer im Drehsinn des Bohrers **1** vorauslaufenden Fläche **9** und einer nachlaufenden Fläche **10** gebildet, die beide in Schlagrichtung **7** weisen und um wenigstens 60 Grad gegenüber der Bohrerachse **2** geneigt sind. Die Schneidkanten **8** sind in ihrer Form ausgelegt, das Gestein zu zertrümmern und ggf. eine Armierung abzuschaben. Die Schneidkanten **8** verlaufen im Wesentlichen in radialer Richtung, z.B. ausgehend von einer Spitze **11** des Bohrkopfs **3** bis zu einem Rand des Bohrkopfs **3,** wo die Schneidkanten **8** vorzugsweise gegenüber der Spitze **11** in Schlagrichtung **7** zurückgesetzt sind. Eine Neigung der Schneidkanten **8** gegenüber der Achse **3** kann in radialer Richtung konstant sein oder im Bereich der Spitze **11** geringer als am Rand sein. Insbesondere kann die Schneidkante **8** am Rand senkrecht zu der Bohrerachse **2** verlaufen. An die in Schlagrichtung **7** weisenden Schneidkanten **8** schließt sich am Rand des Bohrkopfs **3** eine Abbruchkante **12** an, welche parallel zu der der Achse **2** verläuft. Die Abbruchkante **12** steht vorzugsweise radial über die Wendel hinaus. Der Bohrkopf **3** ist an seinem Umfang mit parallel zur Bohrerachse **2** verlaufenden Abfuhrrinnen **13** versehen, entlang welchen das Bohrmehl aus dem Bohrloch transportiert werden kann. Die Abfuhrrinnen **13** sind in Umfangsrichtung **14** zwischen den Schneidkanten **8** angeordnet. Der dargestellte Bohrkopf **3** hat zwei Paare unterschiedlich ausgebildeter Schneidkanten, von denen die die Spitze **11** bildenden Schneidkanten als Hauptschneiden und das andere Paar als Nebenschneiden bezeichnet werden. Anstelle von vier kann der Bohrkopf **3** auch zwei, z.B. nur die Hauptschneiden, oder drei oder mehr als vier Schneidkanten aufweisen. Der Bohrkopf **3** hat eine von der Spitze **11** abgewandte Unterseite **15,** welche beispielsweise eben ist. Die Unterseite **15** kann in einer Ausführungsform zu der Spitze **11** hin gewölbt sein. Der Bohrkopf **3** ist mit der Unterseite **15** an der Wendel **4** angeschweißt.

Der Bohrkopf **3** mit den beispielhaft vier Schneiden **6** ist ein zusammenhängend gesinterter Körper aus zwei verschiedenen Materialien. Der Bohrkopf **3** ist längs der Achse **2** in einen oberen (Arbeits-) Bereich **16** mit den Schneidkanten **8** und einen unteren Sockel **17** mit der Unterseite **15** unterteilt, welche sich in ihrer Materialzusammensetzung unterscheiden. Der Arbeitsbereich 16 und der Sockel 17 berühren einander und sind durch einen Sinterprozess materialschlüssig miteinander verbunden. Der Arbeitsbereich **16** ist aus einem gesinterten Hartmetall. Der Sockel **17** ist aus einem partikelverstärkten Metallverbundwerkstoff. Die Höhe **18** des Arbeitsbereichs **16** liegt beispielsweise zwischen 2 mm und 5 mm. Die Höhe **19** des Sockels **17** liegt vorzugsweise im Bereich zwischen 10 % und 40 % der Gesamthöhe **20** des Bohrkopfes **3.** Der Durchmesser **21** des Sockels **17** ist vorzugsweise etwas geringer als der Durchmesser im Arbeitsbereich **16.** Die Unterseite **15** wird von einem Sockel **17** gebildet. Der beispielhaft dargestellte Sockel **17** hat eine ebene Oberseite **22,** bei einer gewölbten Unterseite des Bohrkopfs **3** ist die Oberseite des Sockels **17** in gleicher Weise gewölbt.

Die Schneidkanten **8** sind aus einem gesinterten Hartmetall, das aus Wolframkarbid und einem metallischen Binder besteht. Andere Materialien können in Spuren von insgesamt weniger als 2 Vol.-%, beispielsweise als Verunreinigung, enthalten sein. Das Wolframkarbid ist der Hauptbestandteil des Hartmetalls, und hat einen Volumenanteil von wenigstens 82 Vol.-%. Nur der hohe Wolframkarbid-Anteil erreicht die für die Schneidkanten **8** notwendige Härte. Ferner erweisen sich andere Karbide als ungeeignet für die Schneidkanten **8.** Das Wolframkarbid liegt als Mittelkorn (medium) vor, mit einer mittleren WC-Korngrösse im Bereich von 1,3 bis 2,5 µm, die in dem metallischen Bindermaterial eingebettet sind. Der metallische Binder ist eine Kobalt-Nickel-Basis-Legierung, die als Hauptbestandteile Kobalt und Nickel enthält. Kobalt und Nickel haben zusammen einen Anteil von wenigstens 80 Vol.-%, bevorzugt wenigstens 85 Vol.-%, an dem Binder. Der Binder kann neben Kobalt, Nickel und gelöstem Wolfram aus dem Wolframkarbid noch Molybdän und/oder Chrom enthalten. Sowohl Nickel als auch Kobalt haben jeweils wenigstens einen Anteil von 20 Vol.-% an dem Binder, d.h. das stöchiometrische Verhältnis von Nickel zu Kobalt liegt im Bereich zwischen 1:4 bis 4:1. Vorzugsweise ist der Anteil von Nickel und Kobalt nahezu gleich mit einem stöchiometrischen Verhältnis zwischen 1:1,5 und 1,5:1.

Der Sockel **17** ist aus einem partikelverstärkten Metallverbundwerkstoff gebildet. Die metallische Matrix des Metallverbundwerkstoffes besteht aus einer Kobaltnickel-Legierung. Die Matrix hat einen Anteil von mehr als 40 Vol.-% und weniger als 75 Vol.-% an dem Metallverbundwerkstoff. Die Kobaltnickel-Legierung enthält im Wesentlichen nur Kobalt, Nickel und gelöstes Übergangsmetall aus den eingebetteten Karbiden von Übergangsmetallen, abgesehen von Verunreinigungen mit einem Anteil von weniger als 2 Vol.-%. Sowohl Nickel als auch Kobalt haben jeweils wenigstens einen Anteil von 20 Vol.-% an dem Binder, d.h. das stöchiometrische Verhältnis von Nickel zu Kobalt liegt im Bereich zwischen 1:4 bis 4:1. Vorzugsweise ist der Anteil von Nickel und Kobalt nahezu gleich mit einem stöchiometrischen Verhältnis zwischen 1:1,5 und 1,5:1. Die Partikel in dem Metallverbundwerkstoff können aus Wolframkarbid, Titankarbid, Niobkarbid, Molybdänkarbid und Chromkarbid sein. Die Partikel liegen als Körner vor, die in der metallischen Matrix eingebettet sind. Die Partikel können zu wenigstens 50 Vol.-% Titankarbid oder Chromkarbid enthalten.

Der Bohrkopf **3** aus den Schneidkanten **8** und dem Sockel **17** wird in einem gemeinsamen Sinterprozess hergestellt. Die Fügezone **22** zwischen den Schneidkanten **8** und Sockel **17** ergibt sich in charakteristischer Weise durch den Sinterprozess. Eine Form für den Bohrkopf **3** wird mit einem pulverförmigen Gemisch der Ausgangsmaterialien Wolframkarbid, Kobalt, Nickel und eines organischen Binders gefüllt. Ein Stempel presst das Gemisch in der Form. In einem nächsten Schritt wird ein zweites pulverförmiges Gemisch der Ausgangsmaterialien für die Kobaltnickellegierung, die Karbid-Partikel und eines organischen Binders in die Form auf das erste Gemisch gefüllt. Das Gemisch wird verpresst. Der organische Binder wird durch Temperaturbehandlung entfernt. Der entstandene Braunling wird bei einer Temperatur zwischen 1200 Grad und 1450 Grad gesintert. Die metallischen Bestandteile der Ausgangsmaterialien werden zumindest teilflüssig und benetzen das Wolframkarbid und die Karbid-Partikel. Der Bohrkopf **3** wird an Luft oder in einem Temperierungsofen abgekühlt. Obwohl zuvor ein mehrstufiges Einfüllen und Verpressen beschrieben wurde, bei dem zuerst das pulverförmige Gemisch für den Arbeitsbereich **16** eingefüllt wird, ist es z.B. auch möglich, das umgekehrte Vorgehen zu wählen und zuerst das pulverförmige Gemisch für den Sockel **17** einzufüllen und zu pressen oder einen einstufigen Pressvorgang durchzuführen, bei dem die Pulvermischungen für die beiden Bereiche übereinander geschichtet in die Form eingebracht und anschließend gemeinsam verpresst werden. Der Bohrkopf **3** wird mit der Bodenfläche **23** auf den Grundkörper **4** aufgeschweißt. Der Grundkörper **4** ist aus einem niedriglegiertem Vergütungsstahl. Zusätze für die Veredlung des Stahls haben einen Anteil von weniger als 5 Gew.-%. Die Bodenfläche **23** des Sockels **17** wird passgenau auf eine Stirnseite des Grundkörpers **4** aufgesetzt. Die beiden Grenzflächen sind vorzugsweise eben, alternativ in gleicher Weise gekrümmt. Das Schweißen erfolgt bei einer Temperatur von ca. 1.200 Grad Celsius, vorzugsweise per Widerstandsschweißen. Für das Schweißen typisch werden in die Schweißzone keine Metalle oder Metallgemische eingebracht, deren Schmelztemperatur unterhalb der Schmelztemperatur des Stahls liegt. Das Schweißen kann durch Zuführen eines Schweißdrahts oder einer Nickelfolie unterstützt werden.

### Beispiel 1

Das Hartmetallpulver des Arbeitsbereichs **16** besteht zu 87,6 Vol.-% aus WC-Pulver mit einer mittleren Partikelgröße um 5 µm und zu 12,4 Vol.-% aus dem Kobalt-Nickel-Basis-Binder. Dieser Kobalt-Nickel-Basis-Binder wiederum besteht aus einem Gemisch von 45,5 Vol.-% Kobalt-Pulver mit einer mittleren Partikelgröße von 1,7 µm, 45,6 Vol.-% Nickel-Pulver mit einer mittleren Partikelgröße von 2,5 µm und 8,9 Vol.-% Molybdänkarbid mit einer mittleren Partikelgröße von 1,5 µm. Unter Zugabe eines organischen Binders wird aus dieser Hartmetall-Pulver-Mischung durch Mahlen in einem Attritor und Versprühen ein erstes Granulat hergestellt.

Der partikelverstärkte Metallverbundwerkstoff des Sockels **17** besteht zu 55 Vol.-% aus WC-Pulver mit einer mittleren Partikelgröße um 5 µm und zu 45 Vol.-% aus der Kobaltnickel-Legierung. Diese Kobaltnickel-Legierung besteht zu 50 Vol.-% aus einem Kobalt-Pulver mit einer mittleren Partikelgröße von 1,7 µm und zu 50 Vol.-% aus einem Nickel-Pulver mit einer mittleren Partikelgröße von 2,5 µm. Unter Zugabe eines organischen Binders wird aus dieser Partikel-Metallmatrix-Pulver-Mischung durch Mahlen im Attritor und Versprühen ein zweites Granulat hergestellt.

Das erste Granulat und das zweite Granulat werden nacheinander in eine Pressform gefüllt, die den Dimensionen eines in Fig. 2 dargestellten Bohrkopfes **3** entspricht, und gemeinsam in einem Prozessschritt verpresst. Der so hergestellte Grünling wird in einem Sinterofen unter Vakuum bei einer Temperatur von 1360°C dichtgesintert, so dass ein Bohrkopf **3** mit 20 mm Durchmesser und einer Gesamthöhe von 12,5 mm entsteht. Die Höhe **19** des Sockels **17** Bohrkopfs **3** entspricht ca. 30% der Gesamthöhe des Bohrkopfs **3.**

Die Unterseite **15** des Bohrkopfs **3** wird auf einen wendelförmigen Grundkörper **4** aus 34CrNiMo6-Stahl aufgeschweißt.

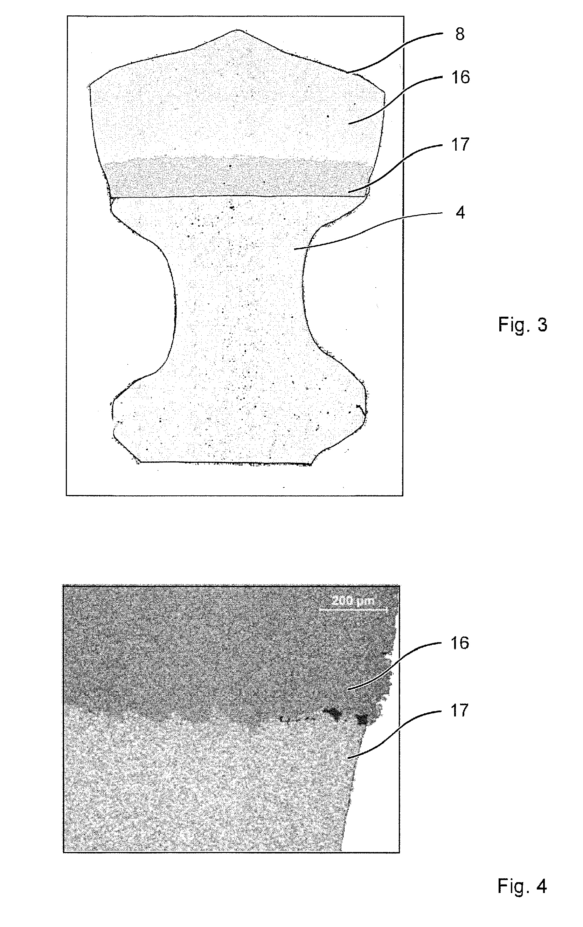

Fig. 3 zeigt einen Längsschnitt durch den Bohrkopf **3.** Fig. 4 zeigt einen Ausschnitt um die Grenzzone zwischen Arbeitsbereich **16** und Sockel **17** auf. Der Arbeitsbereich **16** weist eine deutlich höhere Kontiguität auf als der Sockel **17.**

### Beispiel 2

Das Hartmetallpulver des Arbeitsbereichs besteht zu 87,3 Vol.-% aus WC-Pulver mit einer mittleren Partikelgröße um 5 µm und zu 12,7 Vol.-% aus dem Kobalt-Nickel-Basis-Binder. Dieser Kobalt-Nickel-Basis-Binder wiederum besteht aus einem Gemisch von 42,8 Vol.-% Kobalt-Pulver mit einer mittleren Partikelgröße von 1,7 µm, 42,9 Vol.-% Nickel-Pulver mit einer mittleren Partikelgröße von 2,5 µm und 14,3 Vol.-% Chromkarbid mit einer mittleren Partikelgröße von 1,5 µm. Unter Zugabe eines organischen Binders wird aus dieser Hartmetall-Pulver-Mischung durch Mahlen in einem Attritor und Versprühen ein erstes Granulat hergestellt.

Der partikelverstärkte Metallverbundwerkstoff des Sockels besteht zu 55 Vol.-% aus WC-Pulver mit einer mittleren Partikelgröße um 5 µm und zu 45 Vol.-% aus der Kobaltnickel-Legierung. Diese Kobaltnickel-Legierung besteht zu 50 Vol.-% aus einem Kobalt-Pulver mit einer mittleren Partikelgröße von 1,7 µm und 50 Vol.zu .-% aus einem Nickel-Pulver mit einer mittleren Partikelgröße von 2,5 µm. Unter Zugabe eines organischen Binders wird aus dieser Partikel-Metallmatrix-Pulver-Mischung durch Mahlen im Attritor und Versprühen zweites Granulat hergestellt.

Das erste Granulat und das zweite Granulat werden nacheinander in eine Pressform gefüllt, die den Dimensionen eines 5-schneidigen Bohrkopfs entspricht, und gemeinsam in einem Prozessschritt verpresst. Der so hergestellte Grünling wird in einem Sinterofen unter Vakuum bei einer Temperatur von 1360°C dichtgesintert, so dass ein Bohrkopf mit 28 mm Durchmesser und einer Gesamthöhe von 16,3 mm entsteht. Die Höhe des Sockels des Bohrkopfs entspricht ca. 30% der Gesamthöhe des Bohrkopfs.

Der gesinterte Bohrkopf wird auf einen Stahl-Grundkörper aufgeschweißt.

### Beispiel 3

Das Hartmetallpulver des Arbeitsbereichs besteht zu 87,4 Vol.-% aus WC-Pulver mit einer mittleren Partikelgröße um 5 µm und zu 12,6 Vol.-% aus dem Kobalt-Nickel-Basis-Binder. Dieser Kobalt-Nickel-Basis-Binder wiederum besteht aus einem Gemisch von 50 Vol.-% Kobalt-Pulver mit einer mittleren Partikelgröße von 1,7 µm und 50 Vol.-% Nickel-Pulver mit einer mittleren Partikelgröße von 2,5 µm. Unter Zugabe eines organischen Binders wird aus dieser Hartmetall-Pulver-Mischung durch Mahlen in einem Attritor und Versprühen ein erstes Granulat hergestellt.

Der partikelverstärkte Metallverbundwerkstoff des Sockels besteht zu 55 Vol.-% aus WC-Pulver mit einer mittleren Partikelgröße um 5 µm und zu 45 Vol.-% aus der Kobaltnickel-Legierung. Diese Kobaltnickel-Legierung besteht zu 50 Vol.-% aus einem Kobalt-Pulver mit einer mittleren Partikelgröße von 1,7 µm und zu 50 Vol.-% aus einem Nickel-Pulver mit einer mittleren Partikelgröße von 2,5 µm. Unter Zugabe eines organischen Binders wird aus dieser Partikel-Metallmatrix-Pulver-Mischung durch Mahlen im Attritor und Versprühen ein zweites Granulat hergestellt.

Das erste Granulat und das zweite Granulat werden nacheinander in eine Pressform gefüllt, die den Dimensionen eines 5-schneidigen Bohrkopfs entspricht, und gemeinsam in einem Prozessschritt verpresst. Der so hergestellte Grünling wird in einem Sinterofen unter Vakuum bei einer Temperatur von 1360°C dichtgesintert, so dass ein Bohrkopf mit 12 mm Durchmesser und einer Gesamthöhe von 7,6 mm entsteht. Die Höhe des Sockels des Bohrkopfs entspricht ca. 30% der Gesamthöhe des Bohrkopfs.

Die Unterseite des Bohrkopfs wird auf eine Wendel aus 34CrNiMo6-Stahl aufgeschweißt.

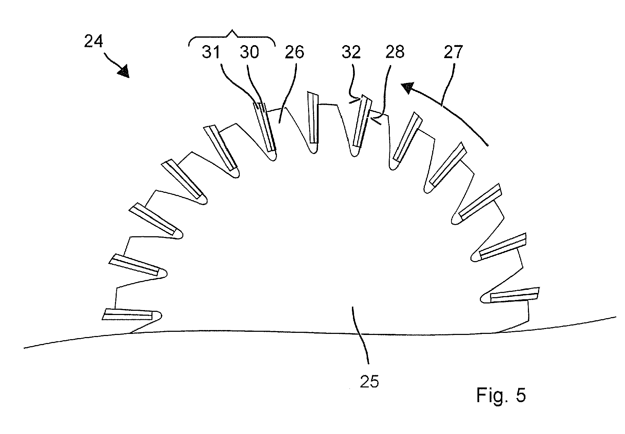

Fig. 5 zeigt einen Ausschnitt eines beispielhaften scheibenförmigen Sägeblatts **24.** Das Sägeblatt **24** hat einen scheibenförmigen Grundkörper **25.** Der Grundkörper **25** ist aus einem niedriglegierten Stahl. Die Scheibe hat mehrere Zahnausnehmungen **26,** die entlang des Umfangs der Scheibe angeordnet sind. Die Zahnausnehmungen **26** haben jeweils eine in den Drehsinn **27** des Sägeblatts **24** weisende Facette **28.** Auf die Facette **28** ist eine verschleißfeste Schneide **29** aufgeschweißt. Die Schneide **29** ist aus zwei Materialien gesintert. Ein Sockel **30** der Schneide **29** besteht aus einem partikelverstärkten Metallverbundwerkstoff. Der Metallverbundwerkstoff hat eine Matrix aus einer Kobaltnickel-Legierung. In die Matrix sind Partikel aus Wolframkarbid, Titankarbid, Molybdänkarbid, Niobkarbid, Chromkarbid oder eine Mischung dieser Karbide eingebettet. Die Partikel haben einen Anteil 25 Vol.-% bis 40 Vol.-% an dem Metallverbundwerkstoff. Der in den Drehsinn weisende Arbeitsabschnitt **31** der Schneide **29** mit der Schneidkante **32** ist aus Hartmetall. Das Hartmetall hat einen sehr hohen Anteil von Wolframkarbid und einen metallischen Binder aus einer Kobalt-Nickel-Basis-Legierung.

## Patentansprüche

1. Werkzeug zum maschinellen Bearbeiten von Werkstoffen mit:
einem Grundkörper (4; 25) aus einem niedriglegierten Stahl und
einer oder mehreren gesinterten Schneiden (6; 29), die zumindest eine Schneidkante (8; 32) und einen Sockel (17; 30) aufweisen und deren Sockel (17; 30) an dem Grundkörper (4; 25) angeschweißt ist,
wobei die Schneidkante (8; 32) aus einem Hartmetall besteht, das wenigstens 82 Vol.-% Wolframkarbid und einen metallischen Binder aus einer Kobalt-Nickel-Basis-Legierung enthält, und
wobei der Sockel (17; 30) aus einem partikelverstärkten Metallverbundwerkstoff besteht, dessen Matrix eine Kobaltnickel-Legierung ist und wobei die Partikel aus Karbiden der Übergangsmetalle der Gruppen IV bis VI des Periodensystems bestehen, und die Matrix einen Anteil von 40 Vol.-% bis 75 Vol.-% des Metallverbundwerkstoffs hat.

2. Werkzeug nach Anspruch 1, **dadurch gekennzeichnet, dass** die Kobaltnickel-Legierung des Metallverbundwerkstoffs ein stöchiometrisches Verhältnis von 1:4 bis 4:1 von Kobalt zu Nickel aufweist.

3. Werkzeug nach Anspruch 1 oder 2, **dadurch gekennzeichnet, dass** die Kobalt-Nickel-Basis-Legierung des Hartmetalls ein stöchiometrisches Verhältnis von 1:4 bis 4:1 von Kobalt zu Nickel aufweist.

4. Werkzeug nach einem der vorhergehenden Ansprüche, **dadurch gekennzeichnet, dass** die Kobalt-Nickel-Basis-Legierung bis zu 12 Vol.% Chrom und/oder Molybdän enthält.

5. Werkzeug nach einem der vorhergehenden Ansprüche, **dadurch gekennzeichnet, dass** der Volumenanteil des Wolframkarbids an dem Hartmetall zwischen dem 1,35-fachen und dem 3,8-fachen des Volumenanteils der Partikel an dem Metallverbundwerkstoff entspricht.

6. Werkzeug nach einem der vorhergehenden Ansprüche, **dadurch gekennzeichnet, dass** die Matrix einen Anteil von 43 Vol.-% bis 49 Vol.% und die Partikel einen Anteil von 57 Vol.-% bis 51 Vol.-% haben.

7. Werkzeug nach einem der vorhergehenden Ansprüche, **dadurch gekennzeichnet, dass** die Schneidkante an den Sockel (17; 30) angrenzt.

8. Werkzeug nach einem der vorhergehenden Ansprüche, **dadurch gekennzeichnet, dass** die Karbide der Übergangsmetalle eines oder mehrere von Wolframkarbid, Titankarbid, Niobkarbid, Molybdänkarbid und Chromkarbid sind.

9. Werkzeug nach einem der vorhergehenden Ansprüche, **dadurch gekennzeichnet, dass** der Sockel (17; 30) mit einer Grundfläche an den Grundkörper angeschweißt ist und eine Höhe (19, 33) des Sockels (17; 30) zwischen 10 % und 40 % der Gesamthöhe (20; 34) der Schneide (6; 29) entspricht.

10. Werkzeug nach einem der vorhergehenden Ansprüche, **dadurch gekennzeichnet dass** das Werkzeug ein Bohrer (1) ist, der einen Bohrkopf (3) mit drei bis sechs zusammenhängend gesinterten Schneiden (6) aufweist.

11. Werkzeug nach Anspruch 10 **dadurch gekennzeichnet, dass** die Schneidkanten (8) jeweils aus einer im Drehsinn des Bohrers (1) vorauslaufenden Fläche (9) und einer im Drehsinn des Bohrers (1) nachlaufenden Fläche (10) gebildet sind und die vorauslaufende Fläche (9) und die nachlaufende Fläche (10) einen stumpfen Winkel einschließen.
